Europäisches Patentamt

European Patent Office

Office européen des brevets

(11) Publication number: **0 242 168**
**A2**

# (12) EUROPEAN PATENT APPLICATION

(21) Application number: **87303226.2**

(22) Date of filing: **13.04.87**

(51) Int. Cl.⁴: **F 02 M 31/16**

(30) Priority: **14.04.86 CA 506625**

(43) Date of publication of application:
**21.10.87 Bulletin 87/43**

(84) Designated Contracting States:
**AT BE CH DE ES FR GB GR IT LI LU NL SE**

(71) Applicant: **Hannah, Keith D.**
**1-6440 Centre Street North**
**Calgary Alberta (CA)**

**Shipley, J. Robson**
**2132 Palisade Road**
**South West Calgary Alberta (CA)**

(72) Inventor: **Hannah, Keith D.**
**1-6440 Centre Street North**
**Calgary Alberta (CA)**

**Shipley, J. Robson**
**2132 Palisade Road**
**South West Calgary Alberta (CA)**

(74) Representative: **Jack, Bruce James et al**
**FORRESTER & BOEHMERT Widenmayerstrasse 4/I**
**D-8000 Munchen 22 (DE)**

(54) Fuel pre-treatment for internal combustion engines.

(57) Noxious emissions from internal combustion engines are reduced by treatment of the fuel before combustion, in such a manner as also to give a performance improvement. A fuel preheater utilizing exhaust manifold heat is disclosed.

EP 0 242 168 A2

## Description

Fuel pre-treatment for internal combustion engines

This invention relates to the treatment of fuel immediately before its combustion in an internal combustion engine.

Heretofore, units that have been proposed for fuel pre-treatment objectives have proven either too cumbersome or generally impracticable for the objectives of this invention in that they have relied upon preheating by heat exchange with engine coolant, thus being ineffective under cold-start conditions and slow to come into operation and to respond to engine load changes and changes in operating conditions.

According to this present invention, a very simple, practical and effective method for gaining noxious emission reduction and increasing power output per fuel unit, is achieved for all internal combustion engines; without limitation to the use of, and interferance with, low temperature, slow response, coolant systems. The device is applicable to all internal combustion engines.

This is achieved by preheating the fuel in a unit which does not interfere with any internal system of a given engine. The unit is fitted in the fuel line and attached directly to the exhaust manifold, thereby to utilise the highest temperature heat source system of the engine and providing the lowest response time possible, to achieve a new working cycle, whilst providing all season start-up in a continual safe mode, through to full operation.

The required fuel temperature is obtained by selecting and/or mixing fuel flows from a heating chamber and from a by-pass system, respectively.

The unit remains completely safe throughout its cycle of operation. In one form of the invention, fuel flow through the unit is controlled by the interplay of a thermostatic relief valve in a fuel heating chamber outlet of the unit and a by-pass line relief valve, and in the by-pass respectively.

The thermostatic relief valve in the heating chamber outlet holds the fuel in the chamber until it attains a preset operating temperature. Until this operating temperature is reached, the engine is supplied through a by-pass line having a preset valve operating at the engine's usual fuel pressure range. When the fuel body in the heating chamber has attained the desired and preset operation temperature, the thermostatic valve allows it to flow onward, causing the by-pass valve to close or modulate by previously set reactive pressure levels. This causes the fuel at the elevated operating temperature to replace or mix with the colder tank source fuel. The higher temperature fuel passes directly to the carburettor and achieves a much enhanced atomisation into the inlet chambers and the combustion cylinders beyond.

In another form of the invention, fuel flow control is exercised by throttle orifices.

The effect of the improved atomisation of preheated fuel is to reduce the noxious emission levels to a lower degree than previously achieved; to provide the same rate of power output for less fuel throughput; and to give reduced wear levels in the fuel and combustion systems beyond the device, with enhanced maintenance cycles.

High heat transfer rates into the fuel are achievable by use of shaped heating chambers to complement the profile of the exhaust manifold, and/or by the application of reflective devices shrouding the heating chamber. Contact surface interplay can be reduced by prudently placed spring supports, giving a constant interface contact throughout the thermal cycle. Fine-tuned reaction to emission levels can be achieved by thermal control of a fan to utilise extra heat from the manifold.

An application of such a device could be to the internal combustion engine of an automobile. This would have salient design parameters of 62°C (143°F) fuel temperature at the heating chamber outlet, interacting with a 34 to 48kPa (5 to 7 p.s.i.) relief valve in the by-pass line to result in fuel entering the carburettor at 32° to 43°C (90° to 110°F). The device as described can be designed to suit any of the specific parameters of a given internal combustion engine. Thus the description of the invention as given, has not to be construed as indicating limitations.

The invention is further disclosed with reference to the drawings, in which:

FIGURE 1 is a schematic representation of one form of a fuel treatment unit embodying the invention;

FIGURE 2 illustrates a practical arrangement of a second embodiment; and

FIGURES 3 to 6 illustrate components of the embodiment of Figure 2.

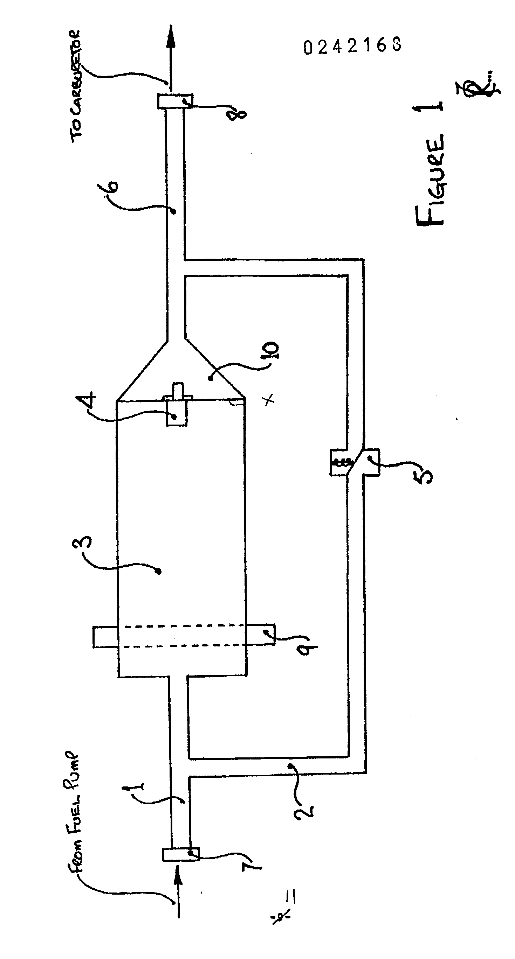

Figure 1 shows the general arrangement of the elements comprising one form of a fuel treatment unit embodying the invention. Save as otherwise specified, the components are constructed in copper tubing, or equivalent high heat transfer material, throughout.

Fuel from the fuel pump of an internal combustion engine enters the device through a main feed tube 1, which has a branch connection to a by-pass line 2 leading to a simple pop valve 5 that vents into another tube connected to a merging line 6.

The main feed tube 1 is connected to the inlet of a heating chamber 3 which is mounted directly on the exhaust manifold of the engine (not shown) with appropriate clamping as at 9. There may be as many clamps as may be appropriate to secure the heating chamber to the manifold.

The heating chamber 3 has an internal retention wall at its downstream end, where the hottest fuel will accummulate. Mounted in that retention wall is a preset thermostatic valve 4 which releases the heated fuel into the merging line 6. The latter connects direct to the carburettor and combustion system of the engine so modified, in place of the normal fuel feed thereto.

In operation and prior to a cold start, the system comprising the tube 1, by-pass line 2 and chambers is filled with fuel under pressure from the engine fuel pump. This fuel is held stationary by closed valves 4 and 5, until the carburettor calls for replenishment and the pressure in line 6 depresses. Thermostatic valve 4 remains closed, because at this stage the fuel in chamber 3 is at a temperature below its preset opening value.

Start-up fuel is accordingly provided by valve 5, in the cold by-pass line 2, opening and allowing flow through line 6 to the carburettor.

As soon as the engine starts the hot exhaust gases heat the exhaust manifold adjacent to the heating chamber 3 and the heat of the manifold begins to warm the body of cold fuel in the chamber 3.

As soon as valve 4 senses fuel at its preset opening temperature it opens, allowing flow of that fuel into line 6. This hot fuel merges with the cold fuel coming from the by-pass line 2, so raising the temperature of the fuel supplied to the carburettor. Opening of the valve 4 reduces the pressure differential across the valve 5 so that this closes, wholly or partially, depending upon its set point relatively to that system pressure and the pressure drop across the chamber 3 and its valve 4.

The flow in line 6 can modulate in temperature between the separate hot and cold supplies from valves 4 and 5, respectively. By appropriate design choices, in the design of the chamber 3 and the sizing and shape of the conical configuration 10 of the chamber, and the size and length of lines 1, 2 and 6, it can be arranged that fuel is delivered at a temperature in the range 32 to 43°C (90 to 110°F).

Although the high temperature of the exhaust manifold is used as the heat source, the configuration of the system, along with the interaction of valves 4 and 5, prevent all tendency for vapour-lock generation. The fuel stays in continuous liquid form, through to the carburettor, at all stages of the working cycle, allowing the carburettor to function as normal on liquid fuel intake. For an automobile application the liquid fuel pressure would not exceed about 48kPa (7 p.s.i.), or that of the fuel pump outlet, less line loss.

Having supplied the fuel to the carburettor at an elevated temperature, the invention allows the rest of the system to provide for enhanced atomisation, which reduces fuel use for the same power generation and reduces the noxious emissions to more tolerable levels; whilst reducing maintenance frequency, and allowing the use of more sophisticated temperature-sensitive fuel additives to gain another level of improvement in internal combustion engine performance.

The fuel feed tube 1 and the merging line 6 are shown diagrammatically as being terminated with couplings 7 and 8 respectively for convenient connection into the normal fuel supply system.

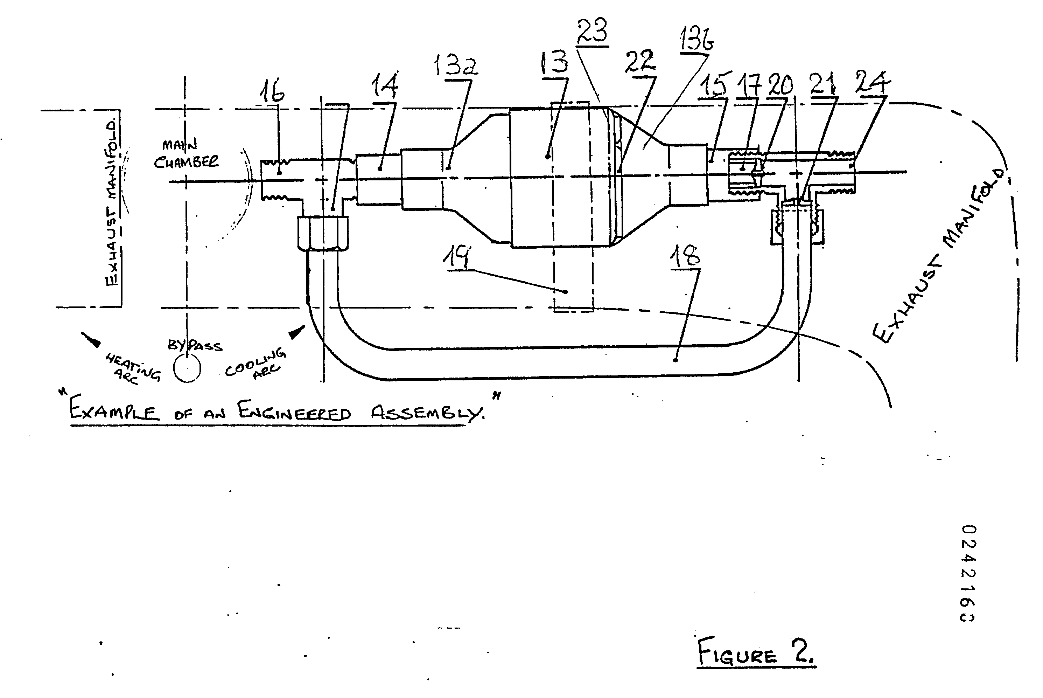

Figure 2 illustrates a practical embodiment in which the heating chamber comprises a cylindrical brass body 13 with conical copper inlet and outlet end parts 13a, 13b, respectively connected by short copper tubes 14, 15 to brass T-pieces 16, 17 respectively. The by-pass line is constituted by a copper tube 18 joining the branch connections of the T-pieces 16, 17. The heating chamber is secured to an engine manifold by a stainless steel clamp strap 19.

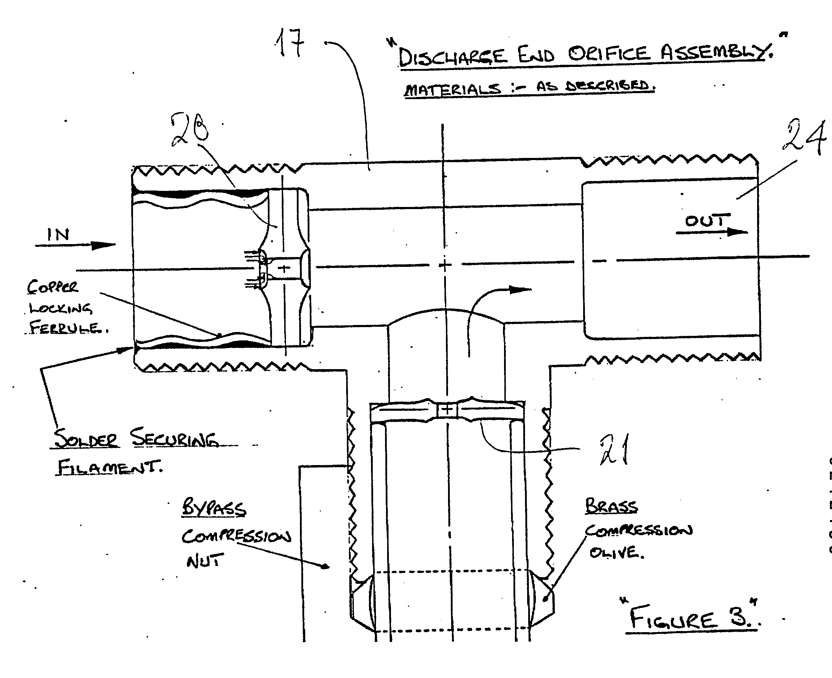

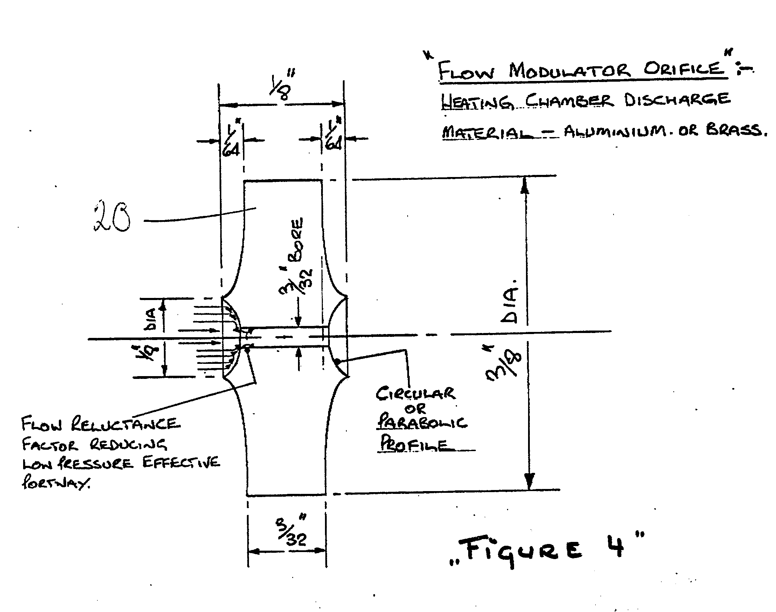

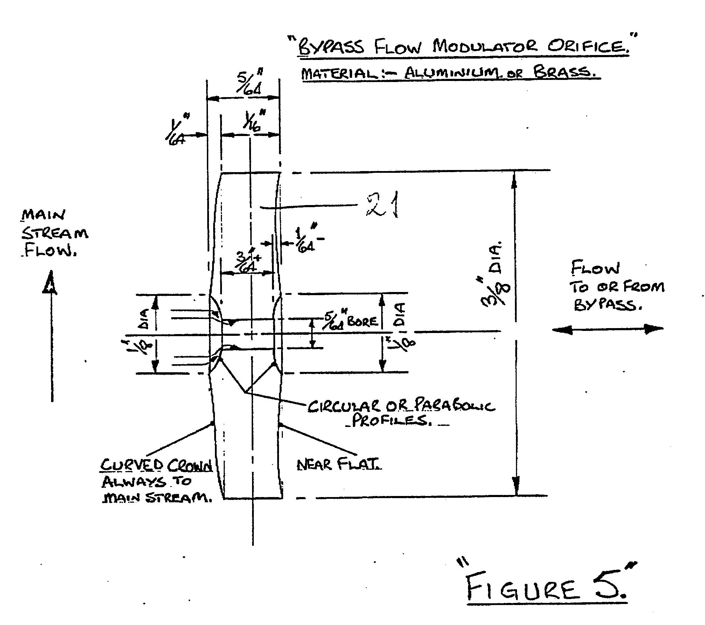

In this embodiment flow control is achieved by orifices in place of the valves 4, 5 of Figure 1. Thus, as shown in Figure 3, the T-piece 17 is fitted with a throttle plate 20 having an orifice that controls flow out of the heating chamber, and a throttle plate 21 having an orifice that controls flow from the by-pass line. The throttle plates 20 and 21 have the configurations shown in Figures 4 and 5 respectively.

The throttle plate 21 may alternatively be positioned in the branch connection of the T-piece 16.

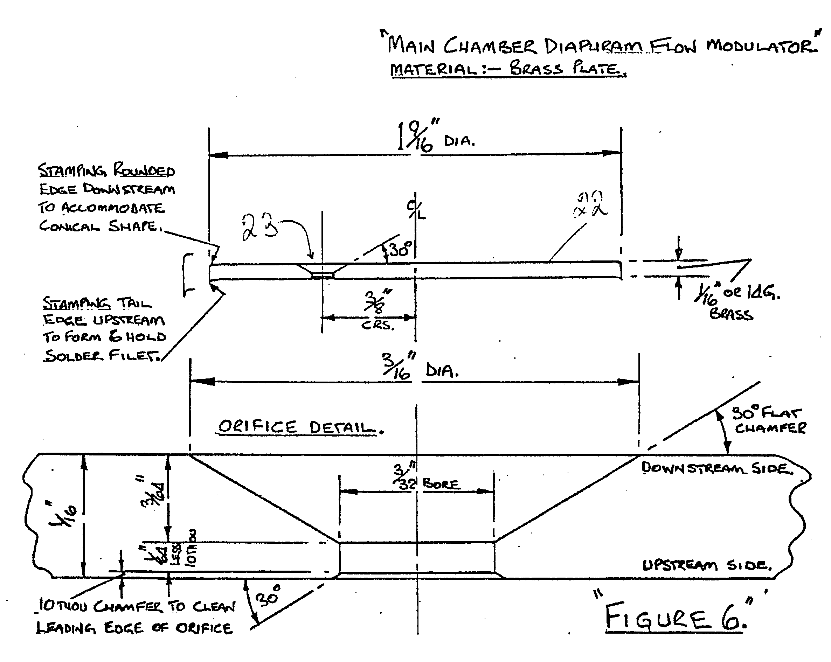

A diaphragm plate 22 at the downstream end of the heating chamber body 13 also has a flow control orifice, offset from the centerline of the chamber, as shown at 23 in Figure 6. Typical dimensions for the orifices are shown on the drawings. However, in general, these orifices are dimensioned and shaped in relation to the fuel flow characteristics of the engine to which the device is to be fitted, to achieve the required fuel temperatures at the outlet connection 24 of the unit, and thus at the carburettor over the working range of the engine fuel flow demand.

This embodiment also uses the by-pass for a heat flow adjustment; by positioning it in closer proximity to the exhaust manifold, as shown in Figure 2 at "HEATING ARC" it will provide for heating of the fuel flowing therethrough, to supplement heating in the heating chamber. Alternatively, by positioning the by-pass further away from the exhaust manifold, than the main heating chamber, as in Figure 2 at "COOLING ARC", it will be subject to cooling air flow or at least not be liable to pick up heat from the manifold. It should be noted that the by-pass also has the function of an alternative fuel supply, should the main chamber choke-up.

Two levels of flow control are achieved by this embodiment, by use of orifices which have spherical or parabolic profiles, to entrance and exit, producing a "FLOW RELUCTANCE FACTOR".

The first level of flow control occurs at the lower pressure or normal running demand condition, where flow impingement on the entrance profile induces a throat reduction at the entrance to the orifice main bore. See Figure 4. The second level of flow control occurs when a sudden high demand is experienced, from the carburettor, which destroys the reduced "throating" and gives a fuller bore flow.

Both flows are within the heating range of the invention's intended purpose, which is to produce fuel at an elevated temperature at the moment of carburation or injection, so that a further refined atomisation occurs.

An assembled relationship between the main flow and the by-pass outlet, is shown in Figure 3. This indicates the continuous merging of flows that occurs, making the by-pass a very powerful component of the refining control applied to the combined output flow, and an integral component of the overall heating capacity of the system.

The volumetric capacity of the main heating chamber, coupled with that of the by-pass, can be directly related to the size of the engine to be serviced, whilst the orifice sizes throughout are designed to be in complete accord with the engine's normal and peak demands.

The features disclosed in the foregoing description, in the following claims and/or in the accompanying drawings may, both separately and in any combination thereof, be material for realising the invention in diverse forms thereof.

## Claims

1. A fuel pre-treatment unit for an internal combustion engine, comprising an in-line fuel heating chamber appropriately clamped to the engine exhaust manifold and having a cold flow by-pass system.

2. A fuel treatment unit according to claim 1, in which the heating chamber outlet is controlled by a preset thermostatic valve.

3. A fuel treatment unit according to claim 2, wherein the thermostatic valve is mounted within a conical end to the heating chamber.

4. A fuel treatment unit according to claim 1, 2 or 3, wherein the heating chamber supply line accommodates an equal flow by-pass line.

5. A fuel treatment unit according to claim 4, wherein the by-pass line flow is controlled by a preset pop valve.

6. A fuel treatment unit according to claim 5, wherein the pop valve outlet is directly coupled by tubing to the heating chamber outlet line.

7. A fuel treatment unit according to claim 1, wherein fuel flows through the heating chamber and the by-pass system are respectively controlled by orifices in the respective fuel flow paths.

8. A fuel treatment unit according to any preceding claim, wherein the combined flows from the heating chamber and the by-pass system are led directly to the carburettor inlet.

9 A fuel treatment unit according to any preceding claim, wherein the heating chamber is clamped in direct contact with the engine exhaust manifold.

10. A fuel treatment unit according to claim 9, wherein the heating chamber is shaped to be complementary to the exhaust manifold.

FROM FUEL PUMP

TO CARBURETOR

FIGURE 1

0242168

16  14  132  13  23  22  136  15  17  20  21  24

EXHAUST MANIFOLD

MAIN CHAMBER

HEATING ARC   BYPASS   COOLING ARC

19   18

EXHAUST MANIFOLD

"EXAMPLE OF AN ENGINEERED ASSEMBLY."

0242168

FIGURE 2.

17 — "DISCHARGE END ORIFICE ASSEMBLY."

MATERIALS :— AS DESCRIBED.

20

IN →

COPPER
LOCKING
FERRULE.

SOLDER SECURING
FILAMENT.

BYPASS
COMPRESSION
NUT

24

OUT →

21

BRASS
COMPRESSION
OLIVE.

"FIGURE 3."

0242168

"FLOW MODULATOR ORIFICE":-

HEATING CHAMBER DISCHARGE

MATERIAL — ALUMINIUM. OR BRASS.

$\frac{1}{8}$"

$\frac{1}{64}$"

$\frac{1}{64}$"

20

$\frac{3}{32}$" BORE

DIA.

$\frac{3}{8}$" DIA.

$\frac{1}{8}$" DIA

CIRCULAR
OR
PARABOLIC
PROFILE

FLOW RELUCTANCE
FACTOR REDUCING
LOW PRESSURE EFFECTIVE
PORTWAY.

$\frac{3}{32}$"

"FIGURE 4"

0242168

"BYPASS FLOW MODULATOR ORIFICE."

MATERIAL :— ALUMINIUM OR BRASS.

"FIGURE 5."

"MAIN CHAMBER DIAPHRAM FLOW MODULATOR"
MATERIAL :— BRASS PLATE.

$1\frac{9}{16}"$ DIA.

STAMPING ROUNDED EDGE DOWNSTREAM TO ACCOMMODATE CONICAL SHAPE.

23

C/L

30°

$\frac{3}{8}"$ CRS.

$\frac{1}{16}"$ OR 14G. BRASS

STAMPING TAIL EDGE UPSTREAM TO FORM & HOLD SOLDER FILET.

$\frac{3}{16}"$ DIA.

ORIFICE DETAIL.

30° FLAT CHAMFER

$\frac{3}{32}"$ BORE

DOWNSTREAM SIDE.

$\frac{1}{16}"$

$\frac{3}{64}"$

$\frac{1}{64}"$ LESS 10 THOU

UPSTREAM SIDE.

30°

10 THOU CHAMFER TO CLEAN LEADING EDGE OF ORIFICE

"FIGURE 6."